# EUROPEAN PATENT APPLICATION

(11) **EP 4 810 307 A1**
(43) Date of publication of application: **23.09.2026**
(21) Application number: 25884210.3
(22) Date of filing: 17.07.2025
(51) Int. Cl.: B60L 53/31, B60L 53/16, B60L 53/35

(54) **CHARGING CONTROL METHOD AND CHARGING CONTROL APPARATUS FOR VEHICLE CHARGING DEVICE**

(30) Priority: 28.10.2024 CN 202411515954
(71) Applicant: Infiforce Technology Holdings (Zhejiang) Co., Ltd., Hangzhou, Zhejiang 310000 (CN)
(72) Inventor: BAI, Huiyuan, Hangzhou, Zhejiang 310000 (CN); YE, Feng, Hangzhou, Zhejiang 310000 (CN); CHEN, Xi, Hangzhou, Zhejiang 310000 (CN)
(74) Representative: Lorenz Seidler Gossel Part. mbB
(86) International application number: PCT/CN2025/109082
(87) International publication number: WO 2026/091689

(57) **Abstract**

The invention provides a charging control method and a charging control apparatus for a vehicle charging equipment. The vehicle charging equipment is hung on a travelling guide rail hoisted on a top of a parking, charging stations connected with a charging gun are arranged in correspondence with parking spaces in the parking along the travelling guide rail, the vehicle charging equipment comprises a charging host mounting platform and a charging host that is hung on the charging host mounting platform in a detachable manner, the charging control method comprises: the charging host mounting platform receives a charging instruction to transport the charging host to a target charging station to execute a charging task; the charging host mounting platform moves to the location of the charging host and is hung with the charging host; the charging host mounting platform hung with the charging host moves to the target charging station; the charging host mounting platform unloads the charging host and causes the same to engage with the target charging station, a movable plugin module of the charging host is electrically connected with a static plug-in module of the charging station, so that the charging host charges a vehicle through the charging gun connected with the charging station.

## Description

### Field of Invention

The invention relates to the field of charging new energy vehicle, specifically, to a charging control method and a charging control apparatus for an overhead rail-mounted vehicle charging equipment.

### Background

By the end of 2023, China's stock of new energy vehicles had reached the highest globally. However, being constrained by the current state of domestic parking spaces, future energy replenishment for new energy vehicles will still rely on shared charging piles. With the state's vigorous promotion of public charging piles, the ratio of charging piles in public parking spaces will continue to rise. Due to the limit by the structure and distribution of existing charging piles, the cost per parking space is becoming increasingly high, such as the site area of charging piles, the number of charging pile devices, and standby power consumption and so on, which lead to high charging pile cost, high energy consumption per parking space, and reduced turnover rates per charging pile. Consequently, there is an urgent demand for charging piles that are low-cost, low resource-efficient, and highly effective.

The structural characteristics and site characteristics of existing public charging piles give rise to various issues during charging vehicles (by the users of the vehicles), such as insufficient dedicated charging parking spaces, being occupied by petrol vehicles, prolonged parking after charging, and queuing for charging, which result in poor charging experience for vehicle owners and constitute a waste of public resources.

Although new energy replenishment solutions such as battery swap stations and wheeled charging robots have emerged on the market to address the aforementioned issues, their inherent characteristics preclude widespread adoption. Specifically, battery swap stations occupy large area, offers limited backup capacity per station, supports few vehicle models, and cannot be installed in underground parking. Wheeled charging robots are each pile-type unmanned charging vehicles equipped with self-contained energy storage, and they have excessively high per-pile cost, meanwhile have to avoid numerous obstacles during travelling on large site, presenting safety and legal risks.

Currently, trying to address the issues presented in the existing pile-type charging devices, there are overhead rail-mounted charging robots, such as the overhead rail-mounted charging device and method thereof described in Chinese invention patent application CN114954079A. However, in scenarios where charging piles are insufficiently proportioned, the cases that the vehicle owners experience excessively long waiting times at parking space or the charging cannot be performed may be occurred.

### Summary of Invention

In order to address the above-described issues in the existing charging robots, the invention aims at providing a charging control method and a charging control apparatus for an overhead rail-mounted vehicle charging equipment capable of improving the efficiency and convenience of locating charging piles for new energy vehicles while effectively reducing the ratio of charging piles in the parking, thereby improving the utilization rate of charging piles assets, by separating the charging host from the charging gun and cable and mounting the charging gun on the charging station.

The first aspect of the invention provides a charging control method for vehicle charging equipment, the vehicle charging equipment is hung on a travelling guide rail hoisted on a top of a parking, a plurality of charging stations each connected with charging gun are arranged in correspondence with parking spaces in the parking along the travelling guide rail, the vehicle charging equipment comprises a charging host mounting platform that can be hung and travel on the travelling guide rail, and a charging host that is hung below the charging host mounting platform in a detachable manner, the charging control method comprises the following steps: a charging instruction receiving step, the charging host mounting platform receives a charging instruction, the charging instruction instructs the charging host mounting platform to transport the charging host to a target charging station among the plurality of charging stations to execute a charging task; charging pile searching step, upon receiving the charging instruction, the charging host mounting platform moves to the location of the charging host and is hung with the charging host; charging pile transport step, the charging host mounting platform hung with the charging host moves to the target charging station in accordance with the received charging instruction; and charging pile unloading and host-station engaging step, the charging host mounting platform unloads the charging host and causes the charging host to engage with the target charging station so as to form an electric connection, wherein, the target charging station is a charging station corresponding to the parking space of a vehicle to be charged, and, in a state where the charging host and the target charging station are engaged, a movable plugin module of the charging host and a static plug-in module of the target charging station form an electric connection, so as to be able to obtain alternate current from the target charging station side to supply power to the charging host, supply a direct current converted by the charging host to the target charging station, thus enabling the charging host to charge a vehicle through the charging gun connected with the target charging station.

Preferably, the charging control method according to the invention further comprises: an initialization step, the charging host mounting platform is initialized as a vacant state; and a charging and billing step, the charging host supplies power to the vehicle and bills the charging.

Preferably, in the charging control method according to the invention, the charging pile searching step further comprises: a station moving-away step, the charging host mounting platform moves away from the current charging station; a parking step executed by the charging host mounting platform for the charging station where the vacant charging host is located; a hanging step, the charging host mounting platform hangs the charging host.

Preferably, in the charging control method according to the invention, the hanging step further comprises the following steps: causing a push and receive module of the charging host mounting platform push towards the charging station side; if a distance between the push and receive module and the charging host reaches a predetermined position, locking the charging host and the push and receive module; the push and receive module carrying the charging host retract from the charging station side towards the charging host mounting platform; after retracting the charging host to the predetermined position, causing the charging host to form a locking with the charging host mounting platform.

Preferably, in the charging control method according to the invention, the charging pile transport step further comprises: releasing a locking state between the charging host mounting platform and the currently parked charging station; the charging host mounting platform carrying the charging host move on the travelling guide rail to the target charging station; the charging host mounting platform forms a locking state with the target charging station.

Preferably, in the charging control method according to the invention, the charging pile unloading and host receiving step further comprises: the charging host forms a locking with the push and receive module of the charging host mounting platform; the push and receive module pushes the charging host towards the target charging station side; after the charging host reaches the predetermined position, causing the charging host to form a locking state with the target charging station; electrically connecting the movable plugin module of the charging host with the static plug-in module of the charging station; the charging host completes a charging protocol handshake with the vehicle.

Preferably, in the charging control method according to the invention, the initialization step further comprises: the push and receive module of the charging host mounting platform retracts towards the charging host mounting platform side; after the push and receive module reaches the predetermined position, the push and receive module recovers an initial state, and the state of the charging host mounting platform is changed to a vacant state.

According to the second aspect of the invention, a charging control apparatus for vehicle charging equipment is provided, the vehicle charging equipment is hung on a travelling guide rail hoisted on a top of a parking, a plurality of charging stations each connected with charging gun are arranged in correspondence with parking spaces in the parking along the travelling guide rail, the vehicle charging equipment comprises a charging host mounting platform that can be hung and travel on the travelling guide rail, and a charging host that is hung below the charging host mounting platform in a detachable manner, the charging control apparatus comprises: a charging instruction receiving means that causes the charging host mounting platform to receive a charging instruction, the charging instruction instructs the charging host mounting platform to transport the charging host to a target charging station among the plurality of charging stations to execute a charging task; a charging pile searching means that causes the charging host mounting platform receiving the charging instruction to move to the location of the charging host and to be hung with the charging host; a charging pile transport means that causes the charging host mounting platform hung with the charging host to move to the target charging station in accordance with the received charging instruction; and a charging pile unloading and host receiving means that causes the charging host mounting platform to unload the charging host and causes the charging host to engage with the target charging station so as to form an electric connection, wherein the target charging station is a charging station corresponding to the parking space of a vehicle to be charged, and, in a state where the charging host and the target charging station are engaged, a movable plugin module of the charging host and a static plug-in module of the target charging station form an electric connection, so as to be able to obtain alternate current from the target charging station side to supply power to the charging host, supply a direct current converted by the charging host to the target charging station, thus enabling the charging host to charge a vehicle through the charging gun connected with the target charging station.

Preferably, the charging control apparatus according to the invention further comprises: an initialization means that initializes the charging host mounting platform as a vacant state; and a charging and billing means that causes the charging host to supply power to the vehicle and to bill the charging.

Preferably, in the charging control apparatus according to the invention, the charging pile searching step further comprises: a station moving-away unit that the charging host mounting platform moves away from the current charging station; a parking unit, executing parking by the charging host mounting platform for the charging station where the vacant charging host is located; a hanging unit through which the charging host mounting platform hangs the charging host.

In summary, the advantageous effects of the invention at least lie in the following aspects:
1. The invention addresses the issues of low utilization rates in conventional charging infrastructure and the substantial ground modification required for parking spaces by using the high mobility of overhead rail-mounted charging equipment (charging robots). It effectively reduces the ratio of charging piles to parking spaces while enhancing the efficiency and convenience of searching piles for new energy vehicles, thereby improving the utilization rate of charging infrastructure assets.
2. The invention enables comprehensive coverage of all parking spaces within a parking without the need for dedicated new energy vehicle parking spaces, facilitating mixed parking for both petrol and electric vehicles. Thus, it resolves issues arising from limited parking capacity, such as petrol vehicles occupying spaces, insufficient dedicated new energy vehicle parking spaces, or low utilization rates of such parking spaces, thereby enhancing the operational efficiency of parking spaces allocation.
3. The invention enables the flexible addition of charging hosts along the rail as the number of new energy vehicles increases, thereby eliminating the need for ground-level construction work while simultaneously meeting the demand for new energy vehicle parking spaces arising from the growth in such vehicles.
4. The invention does not change the vehicle owner's charging habits, eliminating the need to wait for charging. After parking, the owner may manually insert the charging gun. Once the gun is securely connected and the parking space is confirmed within the system, the owner may depart the site without needing to wait at the parking space for the charging host to arrive. This saves the owner's time, particularly when charging hosts are insufficient or when having to wait because prior vehicles are still being charged. The owner need not wait on-site. When an available charging host becomes vacant, the system automatically guides it to the parking space and connects it to the charging station to supply power to the vehicle. This enhances charging convenience for users while improving asset utilization.

### Brief Descriptions for Drawings

Fig. 1A is a structural schematic diagram illustrating a state where a charging host is hung on an vehicle charging system of the invention, and Fig. 1B is a structural schematic diagram illustrating a state where the charging host is not hung on a charging host mounting platform of the vehicle charging system of the invention;
Figs. 2 and 3 are structural schematic diagrams illustrating an vehicle charging equipment of the vehicle charging system of the invention;
Figs. 4A and 4B are structural schematic diagrams illustrating the charging host mounting platform of the vehicle charging equipment of the invention;
Figs. 5A and 5B are structural schematic diagrams illustrating the charging host of the vehicle charging equipment of the invention;
Figs. 6A and 6B are structural diagrams illustrating a charging station of the vehicle charging system of the invention;
Fig. 7 is a flow chart illustrating a charging job of the vehicle charging system/device of the invention;
Fig. 8 is a flow chart of a charging pile searching process of a charging control method of the vehicle charging system/device of the invention; and
Fig. 9 is a detail flow chart of a charging control method of the vehicle charging system/device of the invention.

### List for Reference signs

10: vehicle charging equipment; 1: frame guide rail structure; 101: travelling guide rail; 103: hoisting skeleton; 2: charging host mounting platform; 200: platform body; 201: travelling module; 202: communication and power supply module; 203: positioning module; 204: limit component; 205: push and receive module; 206: travelling rail; 207: base station location recognizer; 208: obstacle detector: 209: proximity sensor; 3: charging host; 301: movable plugin module; 302: travelling module; 303: positioning component; 4: charging station; 400: supporting framework; 400W: side frame; 401:static plug-in module; 402: locking rail; 402H: locking hole; 403: parking fixed beam; 404: communication and power supply module; 405: charging gun socket; 406: charging cable; 407: charging gun; 5: charging terminal; 501: charging gun holder; 502: column.

### Description of Embodiments

The exemplary embodiments of the invention will be described in detail with reference to the drawings below. Noted that, unless otherwise specifically stated, the relative configuration of components, numerical representations, and values described in these embodiments does not limit the scope of the present invention. For the sake of brevity, identical markings or reference numerals are used for identical structural parts or steps, and their descriptions are omitted.

### [The structure of the vehicle charging system of the invention]

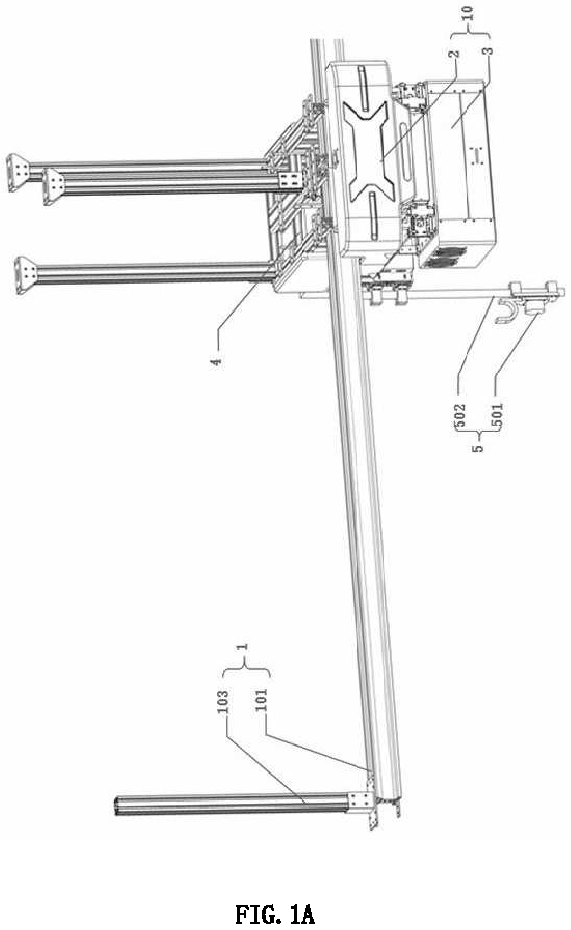

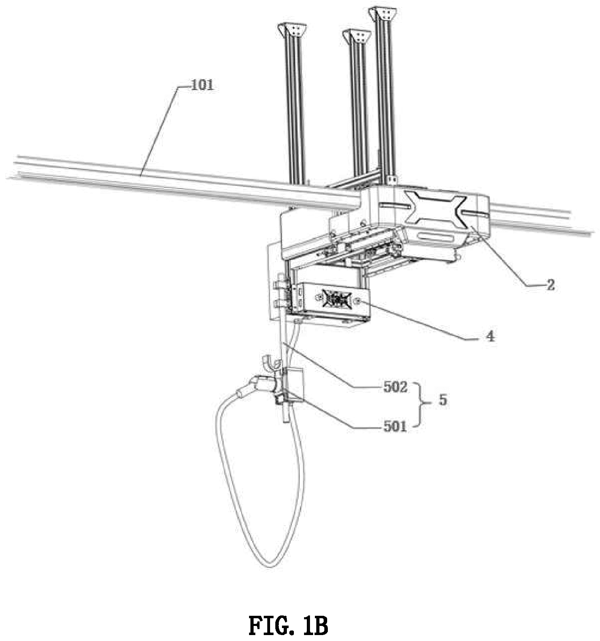

With reference to Figs. 1A and 1B, the structure of the overhead rail-mounted vehicle charging system of the invention is described below. The vehicle charging system comprises: a frame guide rail structure 1 arranged on the top of the parking; an overhead rail-mounted vehicle charging equipment 10; a plurality of charging stations 4 suspended above the parking spaces via the guide rail structure 1 in such a manner that they correspond to the positions of the parking spaces; and charging terminals 5 arranged to correspond to the parking spaces in the parking and capable of accommodating charging guns. The vehicle charging equipment 10 comprises a charging host mounting platform 2 capable of being hung on and travelling on the travelling guide rails, and a charging host 3 mounted in a detachable manner below the charging host mounting platform.

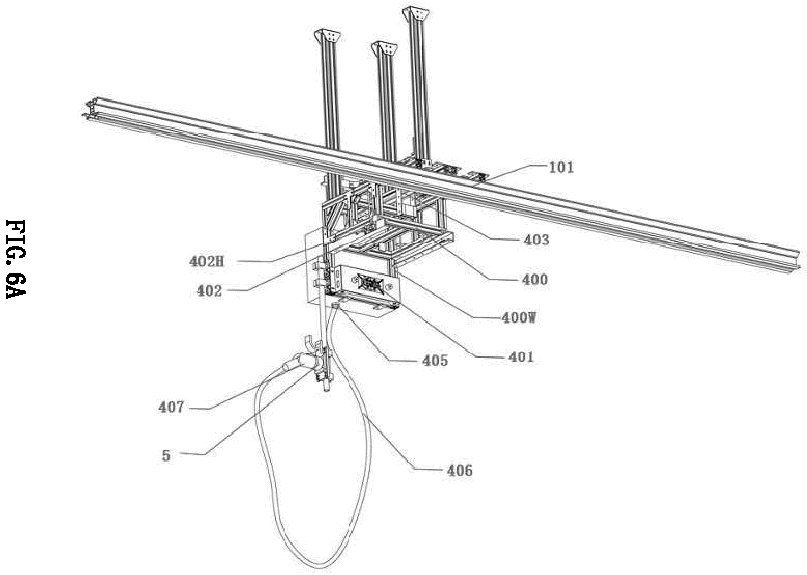

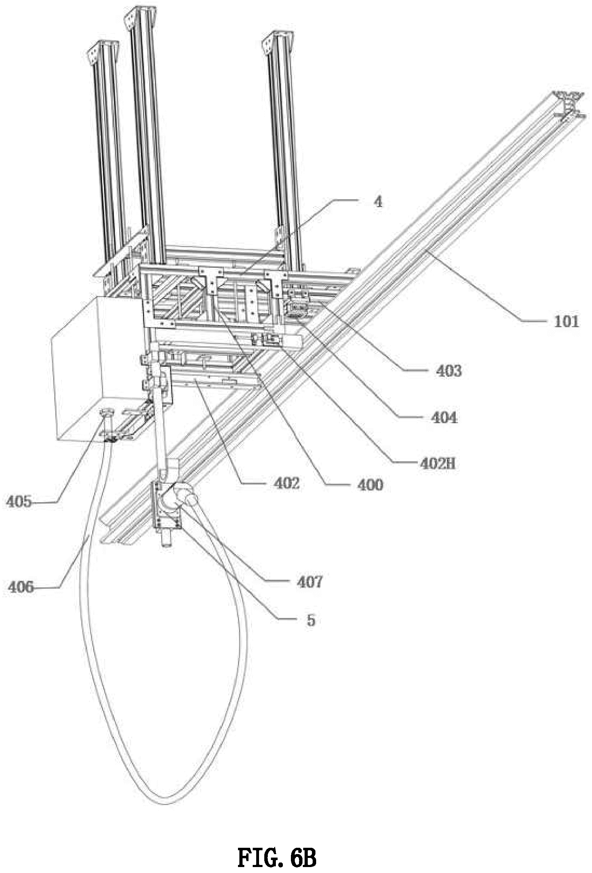

As illustrated in Figs. 1A and 1B, the charging terminal 5 comprises a charging gun holder 501 fixed to the charging terminal for accommodating the charging gun. Preferably, the charging terminal 5 may be mounted in a hoisting manner on a column 502 on the charging station 4 (as shown in Fig. 1B and Figs. 6A and 6B). In addition, the charging terminal 5 may be installed at ground in the parking, for instance, being mounted on the column 502 (ground-column installation manner), or being mounted on the wall (on-wall installation manner).

Upon a vehicle to be charged is parked at any vacant parking space on a charging station 4 side (a charging parking space or target parking space), the user (e.g., the vehicle owner) may remove the charging gun from the charging terminal 5 and insert it into the vehicle's charging port to prepare for charging. The user may issue a charging command via a user terminal (e.g., a mobile phone) or an in-vehicle terminal. Alternatively, the vehicle charging system may receive the charging command issued by the user through operation of the user terminal or in-vehicle terminal after detecting the insertion of the charging gun into the vehicle's charging port. Upon receiving the charging command, the charging host mounting platform 2 hangs an adjacent vacant charging host 3 and transports it to the charging station (the target charging station) 4 corresponding to the target parking space. The charging host 3 is then electrically connected to the target charging station 4, enabling it to supply power to the vehicle via the charging station 4 and the connected charging gun 407.

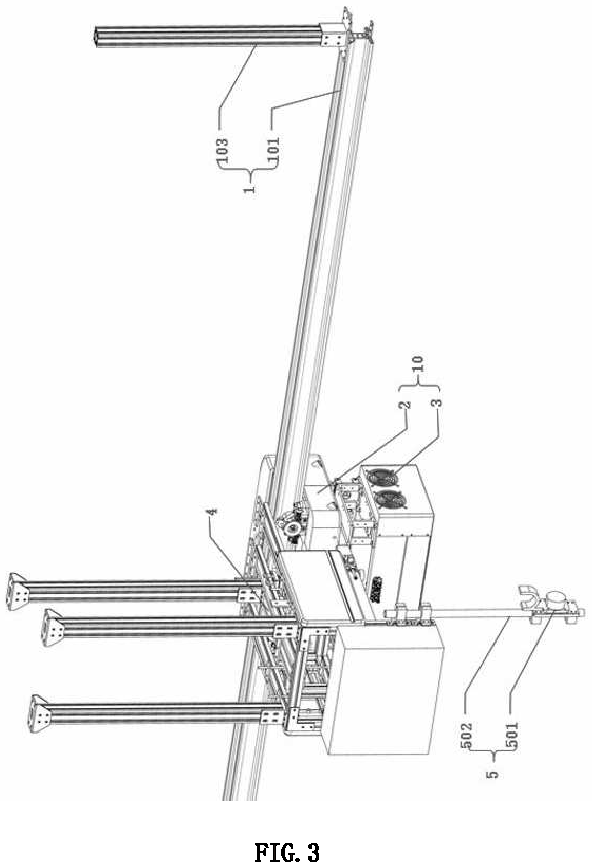

The specific structure of guide rail structure 1 is described below with reference to Fig. 1A. As shown in Fig. 1A, the guide rail structure 1 comprises: a travelling guide rail 101 arranged above parking spaces in the parking and hung in a penetrating manner; and a hoisting skeleton 103 securing travelling guide rail 101 to the top of the parking, the hoisting skeleton 103 is installed above the covered parking space. As an example, the travelling guide rail 101 illustrated herein exhibits an I-beam cross-section (as shown in Figs. 1A, 3, and 6B), obviously other shapes or configurations may be employed.

The charging stations 4 may be arranged in a one-to-one correspondence with the parking spaces, arranged above each parking space along the route of the travelling guide rail. Of course, other arrangement manners may be employed, for example, with regard to the two parking spaces arranged in a rear-to-rear manner, a two-to-one arrangement manner may be employed, alternatively, three-to-one or four-to-one manners may be employed based on specific parking spaces layouts. Furthermore, the charging stations 4 may be arranged by combining two or more of the above arrangement manners.

The charging host mounting platform 2 of the vehicle charging equipment 10 can be hung on the travelling guide rail of the guide rail structure 1 and can communicate with a server via a network to travel along the travelling guide rail 101 between each charging stations according to the instructions of the server.

The charging stations included in the vehicle charging system of the invention and the specific structure of the vehicle charging equipment are described in detail below.

### [The structure of the charging station of the invention]

With reference to Figs. 6A and 6B, the structure of the charging station according to the invention is described below. The charging station 4 comprises: a supporting framework 400, a static plug-in module 401, a locking rail 402, a parking fixed beam 403, and a communication and power supply module 404. The supporting framework 400 employs a frame structure, with the side frame 400W on the side of the supporting framework 400 away from the travelling guide rail extending downward, and the static plug-in module 401 is provided on the extending portion of the side frame 400W. As a preferable example, the static plug-in module 401 in Fig. 6B is positioned at the center of the side frame 400W. It is evident that the static plug-in module 401 may be also located on the side of the frame 400W near an edge, provided it aligns with the corresponding moving plug-in position.

The axis of the locking rail 402 is perpendicular to the travelling guide rail 101 and is positioned at the bottom of the supporting framework 400 to carry and define the charging host. The locking rail 402 has a locking hole 402H formed on the end of the locking rail 402 axially proximate to the travelling guide rail 101, so as to engage with the positioning module of the charging host (described later) to form a locking state between the charging host and the charging base station, thereby preventing the host from detaching or falling from the station. The parking fixed beam 403 may employ a straight beam column structure, so as to be arranged at the top of the supporting framework 400 in a manner parallel to the locking rail 402, and extends towards the travelling guide rail 101 side and is fixedly connected with the travelling guide rail 101 above the same. The parking fixed beam serves as the locking mechanism of the charging hanging platform when parked.

The communication and power supply module 404 is fixed to the bottom surface of the parking fixed beam 403 and close to the travelling guide rail 101, so that it can engage with the positioning module of the charging host mounting platform 2 to form a clamped locking state. In this state, the communication and power supply module 404 of the charging station 4 engages with the communication and power supply module of the charging host mounting platform 2 to form an electrical connection and enable mutual communication. Further, the static plug-in module 401 engages with the movable plugin module on the charging host to form an electrical connection.

The charging station 4 further comprises a charging gun socket 405 provided on the side frame 400W. The charging station 4 connects to the charging cable 406 via the charging gun socket 405 to provide the charging gun 407 with power supply, communication control, and other functionalities.

### [The structure of the vehicle charging equipment of the invention]

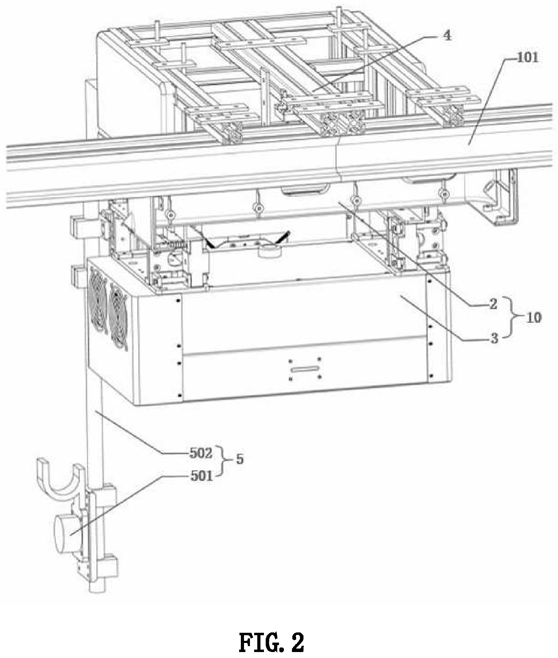

With reference to Figs. 1A, 1B, 2 and 3, the structure of the vehicle charging equipment of the invention is described below. The vehicle charging equipment 10 of the invention comprises: a charging host mounting platform 2 and a charging host 3 detachably hung below the charging host mounting platform 2. In the operational state, the charging host mounting platform 2 is hung below the frame travelling guide rail 101. The charging host mounting platform 2 is capable of moving along the travelling guide rail 101 of the frame guide rail structure 1 between each charging stations 4, with the charging host 3 hung or detached, and the hung charging hose 3 can be pushed to the charging station 4 side to be detached.

The specific structure of each portion included in the vehicle charging equipment of the invention is described in detail below.

### [The structure of the charging host mounting platform of the invention]

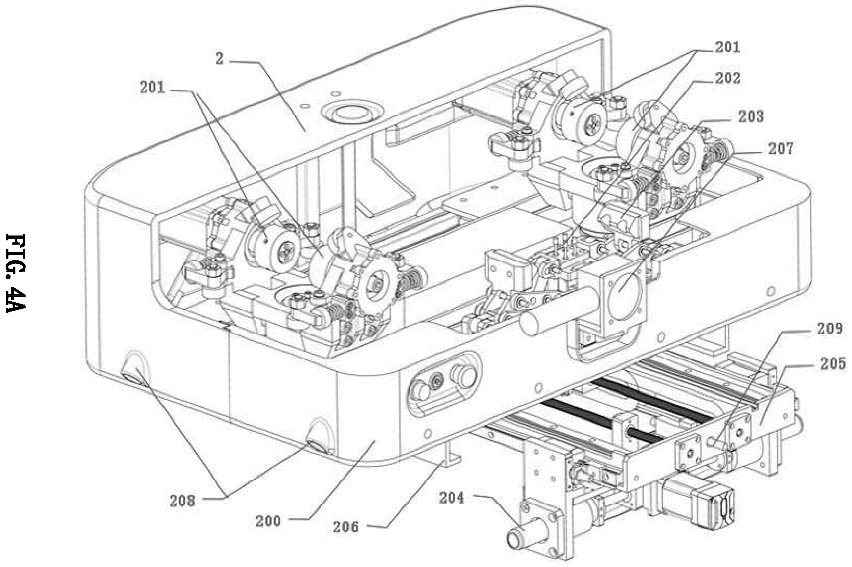

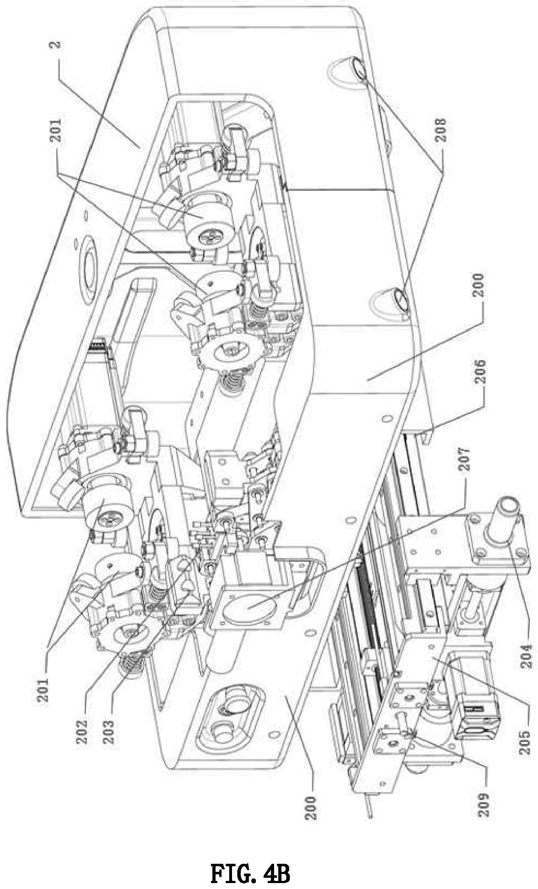

With reference to Figs. 4A and 4B, the structure of the charging host mounting platform is described below. Specifically, the charging host mounting platform 2 comprises a platform body 200. Two travelling modules 201 are arranged on the top surface of the platform body 200. As a preferable example, two travelling modules 201 (201A and 201B) are symmetrically arranged along both sides of the platform body 200's longitudinal direction (parallel to the travelling guide rail 101 when hung). Obviously, the number and arrangement of travelling modules 201 are not limited to this, other number and layouts may also be employed.

As a preferable example, in this embodiment, each travelling module 201 employs a set of rollers symmetrically arranged along both sides of the platform body 200's transverse direction (perpendicular to the travelling guide rail 101 when hung). In the hung state, the travelling guide rail 101 is clamped between the central positions of each set of rollers. Obviously, the number of the set of rollers is not limited to two, for example, it may be more than two sets. The arrangement manner of the set of rollers is not limited to the arrangement manner described above, either.

The travelling module 201 further comprises a travelling motor 201C, and the set of rollers connected to the travelling motor 201C is a set of drive rollers 201B, while the set of rollers not connected to the travelling motor is a set of driven rollers 201A. As a preferable embodiment, motors are mounted on the travelling modules 201 at two front sides in the longitudinal direction. In the operation state, the sets of drive and driven rollers of the travelling module clamp the travelling guide rail therebetween, respectively. By means of the drive of the travelling motors, the set of drive rollers causes the charging host mounting platform 2 to move forward and rearward along the travelling guide rail 101.

The charging host mounting platform 2 further comprises a positioning module 203 located on the top surface of the platform body 200, and a communication and power supply module 202 arranged on the top of the positioning module 203. When the positioning module 203 forms locking with the parking fixed beam 403 of the charging station 4, the communication and power supply module 202 engages with the communication and power supply module on the parking fixed beam to obtain power and perform communication. The positioning module 203 is a gripping mechanism. The parking fixed beam 403 is clamped by the extension and retraction driven by a lead screw, so that the charging host mounting platform 2 locks with the charging station 4.

The platform body 200 may be provided with components such as a rechargeable battery, processor, and memory inside. When the charging host mounting platform 2 is not energized by the charging station 4, the rechargeable battery can supply power for operations of the charging host mounting platform 2 including travelling on the guide rails, transmitting and receiving commands and information, detecting obstacles, obstacle avoidance control, and positioning. The memory can store computer programs for various operations or processes of the charging host mounting platform 2, such as overhead rail-mounted travelling, energization, communication, hanging the charging host, detaching the charging host, and locking the charging station. The processor executes the computer programs stored in the memory to implement the corresponding process.

Further, the charging host mounting platform 2 also comprises: a push and receive module 205 and a travelling rail 206 provided at the bottom of the platform body 200. Also, a limit component 204, which is a movable mechanism, is provided at the end of the push and receive module 205 facing away from the charging station. As a preferable embodiment, the limit component 204 of the invention adopts a spring-loaded pin structure; however, it is evident that limiting mechanisms with other structure may also be employed.

Moreover, the limit component 204 matches with the positioning module of the charging host 3. When the limit component 204 opens (ejecting the pins to protrude towards two sides), the positioning component 303 of the charging host 3 is abutted outward and locked firmly, so that the push and receive module 205 locks with the charging host 3. As the push and receive module 205 continues to push towards the charging station 4 in such a manner that the charging host 3 is locked (or retracts from the charging station 4 towards the charging host mounting platform 2), the locking state between the charging host 3 and the charging host mounting platform 2 (or the charging station 4) can be released. Also, when the charging host mounting platform 2 locks with the charging station 4, the travelling rail 206 engages with the locking rail 402 of the charging station 4 to form a horizontal rail, which causes the push and receive module 205 can carry the charging host 3 to move between the charging host mounting platform 2 and the charging station 4.

When the locking state between the push and receive module 205 and the charging host 3 is going to be released, the limit component 204 is released and the positioning component 303 of the charging host is retracted inward along the longitudinal direction, so that the locking between the limit component 204 and the charging host 3 is released.

Further, the charging host mounting platform 2 also comprises a base station location recognizer 207 and an obstacle detector 208 equipped on the periphery of the platform body 200. The base station location recognizer 207 can be arranged on the side of the platform body 200 of the charging host mounting platform facing the charging station. By means of the base station location recognizer 207, the QR code on the charging station side can be recognized, in order to determine the position of the charging station, so that the positioning operation on the relative position of the charging host mounting platform 2 with the station can be performed. When the charging host mounting platform 2 moves on the travelling guide rail, a coarse positioning on the charging station is performed by the base station location recognizer 207 so as to assist the position of itself on the rail, and an initial relative positioning on the target charging station is performed. The obstacle detector 208 may be a sensing device mounted on the outer surface of the platform body. The sensing device may, for example, be a camera, distance sensor, etc. As a preferable manner, for example, the obstacle detector 208 may be arranged on end surfaces at both sides along the longitudinal direction of the platform body (parallel to the travelling guide rail 101 in the hung state) and on the bottom surface near the outer edge, so as to perform control when the platform travels on the rail by the sensing results on the environment by the sensing assembly, such as environment sensing and obstacle avoidance.

In summary, as the charging host mounting platform of the overhead rail-mounted charging host can travel above the each parking spaces in the parking and between the charging stations along the travelling guide rail, the charging host functions not only as a mobile charging pile to move between each charging stations and recharges itself when being vacant, but also responds to vehicle charging requests at individual parking spaces to supply power to vehicles at different target parking spaces corresponding to different charging stations. Thus, the vehicle charging equipment of the invention exhibits high mobility, can improve the efficiency and convenience of locating charging piles for new energy vehicles while effectively reducing the ratio of charging piles, thereby improving the utilization rate of charging host.

### [The structure of the charging host of the invention]

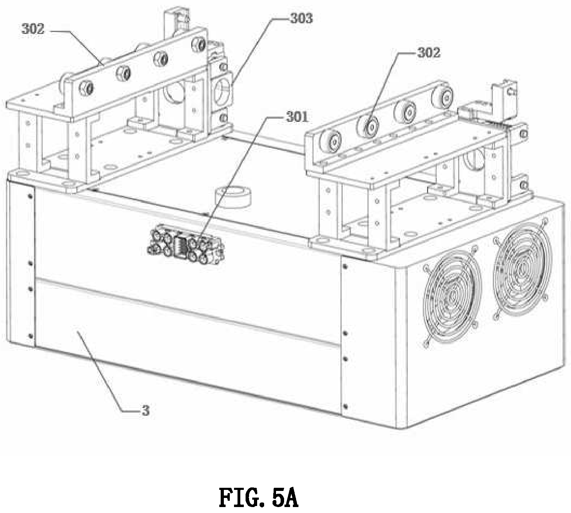

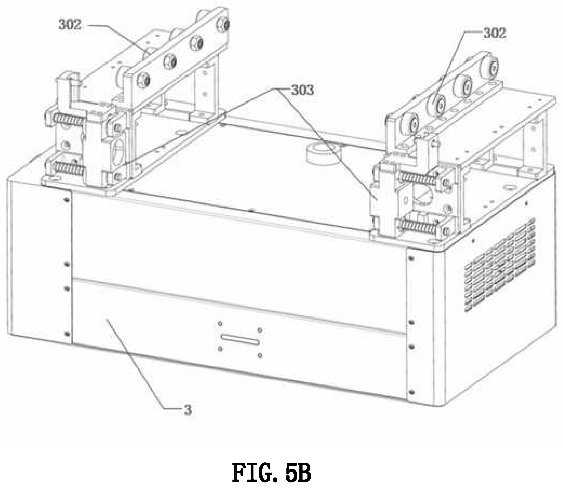

The structure of the charging host is described with reference to Figs. 5A and 5B below. The charging host 3 comprises a positioning component 303, which is located at the top of the charging host and turns its back to the side end of the charging station along the transverse direction (perpendicular to the travelling guide rails in the hung state). As a preferable example, a snap-pin structure that matches the limit component 204 is employed, but this is not limiting, other interlock structure that matches the limit component 204 may also be employed. The positioning component 303 is operable to cooperate with the limit component 204 of the charging host mounting platform 2. When the limit component 204 opens (extending outward), the positioning component 303 is abutted outward, so that the positioning component 303 locks with the limit component 204, thereby achieving locking of the push and receive module 205 with the charging host 3. When the limit component 204 retracts, it unlocks from the positioning component 303, so that the charging host and the charging host mounting platform 2 or the locking rail on the charging station form a locked state. The positioning module of the charging host and the limit component of the charging host mounting platform cooperate with each other to form a locked fixation between the charging host and the push and receive module, the locking rail on the charging station, and the charging host mounting platform.

The charging host 3 further comprises: two sets of travelling modules 302 mounted on its left and right sides, enabling the charging host to move on the travelling rails, so that the charging host may move to and for between the hanging platform and the charging station; a movable plugin module 301, which engages with the static plug-in module on the charging station to form an electrical connection, obtains alternating current on the power grid side from the charging station to supply power to the charging host, supplies the charging station with power converted by the charging host at the same time, so as to be used for vehicle charging via charging cables and charging guns. As a preferable example, both the moving and static plug-in modules may employ a contact pin structure, wherein part of the contact pins connect with signal lines. Thus, in a state where the moving and static plug-in modules are engaged and energized, multiple signal lines of the charging guns are connected with the charging host, for example, it is possible to read and feedback the various states of the new energy vehicle, etc.

Further, the charging host comprises core modules such as AC-DC conversion module, billing module, communication module, and safety switch.

In summary, aerial rail scheduling enables the orderly supply of power to multiple parking spaces through a queuing manner. When the number of charging hosts fails to meet existing charging demand, it is possible to flexibly, conveniently and dynamically increase or reduce overhead rail-mounted charging hosts to satisfy requirements, so as to achieve a dynamic equilibrium between charging operators' revenue, charging demand, and cost reduction.

Further, in the vehicle charging equipment/system of the invention, when a vehicle owner issues a charging request, an vacant charging host may be automatically dispatched to the above of the designated parking space (target parking space) to charge the vehicle. Upon completion of charging, the charging host can autonomously depart from the current parking space to serve other vehicle owners, thereby resolving the issue of parking space occupation.

Meanwhile, by achieving full parking coverage of aerial rail systems, it becomes feasible to accommodate both petrol and electric vehicles within the same parking at a manageable cost. Also, as new energy vehicles progressively replace petrol-powered ones, charging hosts can be flexibly and conveniently increased to meet the growing demands of car owners without requiring additional infrastructure investment.

In order to better understand the operational procedures of the vehicle charging system and vehicle charging equipment of the invention, the control method thereof is described in detail below.

### [Charging control method of the vehicle charging system/vehicle charging equipment]

In the charging preparation phase, the vehicle user (hereinafter referred to as the user) parks the vehicle in a parking space (target parking space) on the side of any vacant charging station (target charging station), removes charging gun 407 from charging terminal 5 and inserts it into the vehicle's charging port. Once the charging gun is locked with the vehicle's charging port, it gets ready for charging. The user make an issuance by operating the control program on the user terminal, to request to charge at the target charging station.

User terminals include, but are not limited to, in-vehicle systems and mobile devices. The charging control program may be a standalone mobile application or a mini-program installed on the user terminal. The charging request at least includes identification information for the target charging station corresponding to the designated parking space for the vehicle to be charged.

The vehicle charging system of the invention may receive the charging request via a server, and the charging request may also be received directly by the vehicle charging equipment of the invention (such as the host hanging platform or the vacant charging station corresponding to the target parking space). The description is made below by taking the case where the charging request is received by the server as an example.

Upon receiving the charging request, the server identifies and locks a vacant charging host near the target charging station based on the charging station's identifier contained within the request. The server then dispatches a nearby vacant charging host mounting platform to transport this vacant charging host to the target charging station for the charging task. After the charging completes, the charging host mounting platform recovers to initial state and starts processing the next charging instruction. Obviously, the functions of dispatching the charging host mounting platform and issuing charging instructions are not limited to be executed by the server, they may also be performed by the charging station, the charging host, or any combination of two or more of them in the charging host mounting platform.

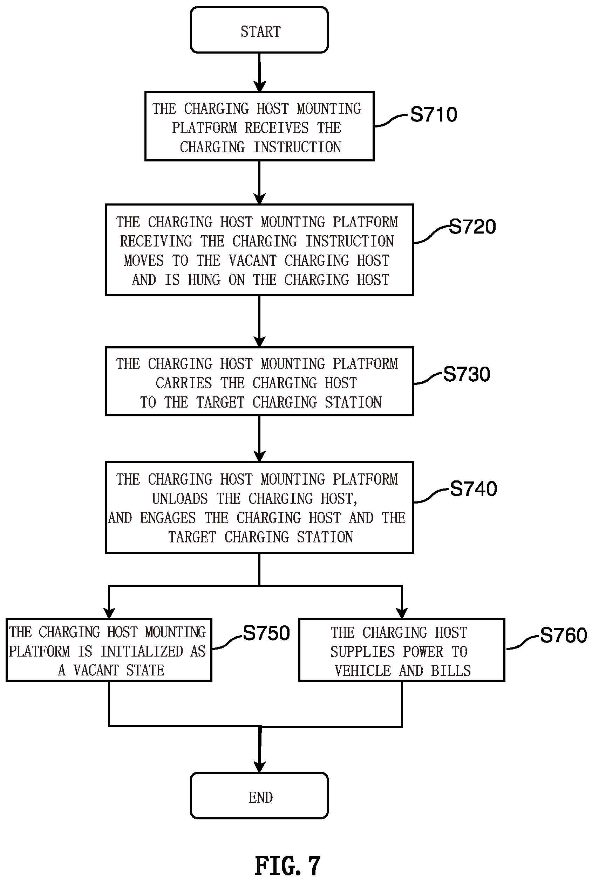

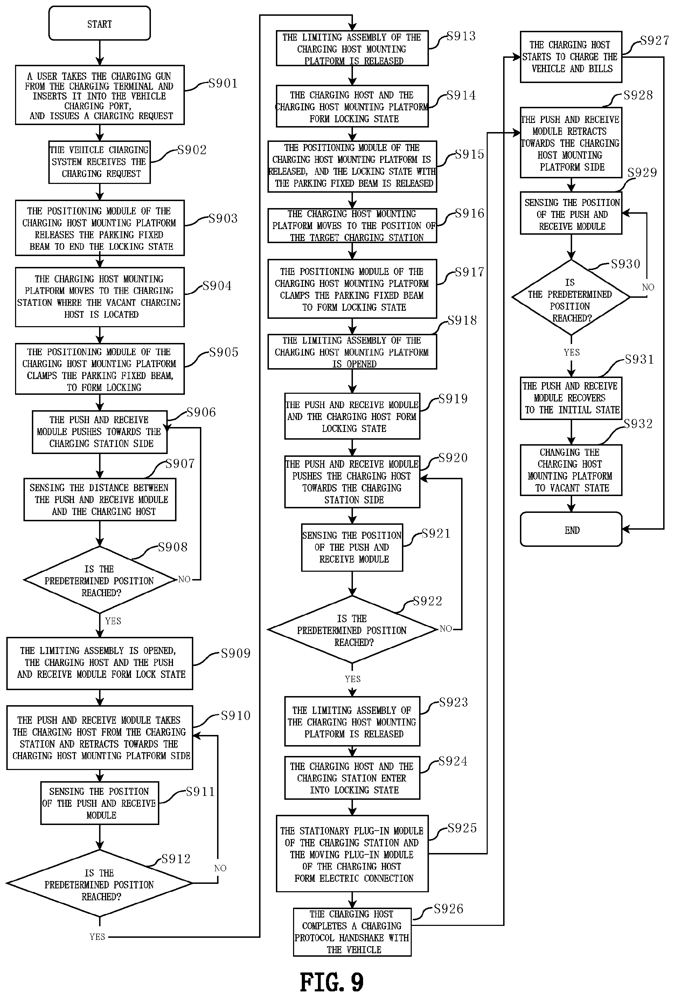

The charging control method of the vehicle charging equipment/system of the invention is described in detail below with reference to Figs. 7 to 9. Specifically, the charging control method of the invention comprises the following processing steps. After the vehicle charging system receives the charging request issued by the user (S901, S902 in Fig. 9), a charging instruction to transport the vacant charging host to the target charging station to perform charging task is sent to the vacant charging host mounting platform, thus the following charging pile obtaining process is activated (including steps S710 to S750 in Fig. 7).

First, the vacant charging host mounting platform receives the charging instruction to transport the vacant charging host to the target charging station for a charging task (charging instruction reception step S710).

Subsequently, the charging host mounting platform receiving the charging instruction executes the charging pile searching process (charging pile searching step S720), that is, the charging host mounting platform 2 receiving the charging instruction moves to the vacant charging host 3 and is hung onto charging host 3.

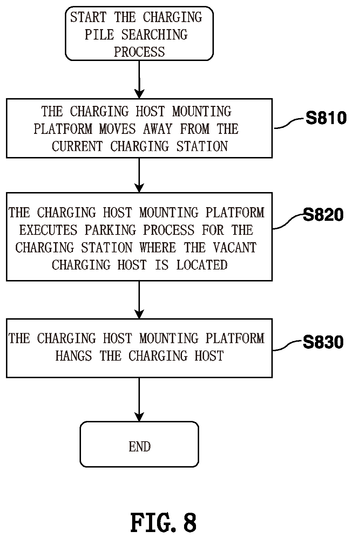

Specifically, the charging pile searching process in step S720 comprises the following sub-processes (steps S810 to S830 in Fig. 8). First, a station departure step (S810) where the charging host mounting platform departs from the current charging station. This station departure step S810 specifically comprises the following sub-steps S903 to S904 in Fig. 9: the positioning module 203 of the charging host mounting platform 2 retracts (releasing the parking fixed beam 403) to end the locked state with the parking fixed beam 403 of the charging station 4 (S903); The travelling module 201 of the charging host mounting platform 2 drives the charging host mounting platform 2 to move along the travelling guide rail 101 towards the charging station 4 where the nearest vacant charging host 3 is (S904). The relative position between the charging host mounting platform 2 and the charging station 4 can be calibrated by the base station location recognizer 207.

Next, proceeding to step S820, the charging host mounting platform executes parking process for the charging station where the vacant charging host is located. Specifically, this parking process comprises the step S905 in Fig. 9. In step S905, the charging host mounting platform 2 activates its positioning module 203 to clamp the parking fixed beam 403, thereby forming a locked state with the parking fixed beam 403 of the charging station 4. In this locked state, the communication and power supply module 202 above the positioning module 203 engages with the communication and power supply module 404 on parking fixed beam 403, so that the charging station 4 can supply power to the charging host mounting platform 2 and perform mutual communication.

Then, proceeding to step S830, the charging host mounting platform executes the hanging process of hanging the charging host. Specifically, the hanging process in the step S830 comprises the following sub-steps S906 to S914. First, the push and receive module 205 pushes towards the charging station 4 (S906). The proximity sensor 209 of the charging host mounting platform 2 senses the distance between the push and receive module 205 and the charging host 3 (S907), and determines whether a predetermined position is reached (S908). If the predetermined position is reached, the limit component 204 opens to lock the charging host 3 and the push and receive module 205 (S909). The push and receive module 205 carrying the charging host 3 retract from the locking rail 402 towards the travelling rail 206 via the travelling module 302 (S910).

The proximity sensor senses the position of the push and receive module 205 (S911) and determines whether the push and receive module 205 reaches the predetermined position (S912). Upon determining that the charging host 3 receives the predetermined position, the limit component 204 releases (S913). The positioning component 303 of the charging host 3 locks with the limit component 204 of the charging host mounting platform 2, thereby forming a lock between the charging host 3 and the charging host mounting platform 2 (S914). Thus, the charging pile searching process (S720) ends.

Next, proceeding to charging pile transport step S730, the charging host mounting platform hanging the charging host, executes the charging pile transport process of transporting the charging host to the target charging station in accordance with the received charging instruction. This charging pile transport process specifically comprises sub-steps S915 to S917.

First, the positioning module 203 of the charging host mounting platform 2 releases, disengages from the locking state with the parking fixed beam 403 (S915). Then, the charging host mounting platform 2 carrying the charging host 3 moves on the travel guide rail 101 to the target charging station 4 via the travelling module 201 (S916). The relative positioning between the charging host mounting platform 2 and the charging station 4 is calibrated by the base station location recognizer 207. The positioning module 203 clamps the parking fixed beam, so as to form a locked state with the parking fixed beam 403 of the target charging station (S917).

Next, proceeding to step S740 for unloading the charging pile and receiving the charging station, the charging host is detached from the charging host mounting platform 2, and is engaged with the target charging station. Specifically, the charging pile unloading and host receiving process in step S740 comprises the following sub-steps S918 to S927.

First, the limit component 204 of the charging host mounting platform 2 opens (S918), so that the charging host 3 forms locking with the push and receive module 205 (S919). Then, the push and receive module 205 carries the charging host 3 towards the target charging station 4 side (S920), so that the charging host 3 moves to the locking rail 402 side of the charging station 4 via the travelling rail 206 of the charging host mounting platform 2. The proximity sensor 209 senses the position of the push and receive module 205 (S921) and determines whether the predetermined position is reached (S922). If it is determined that the charging host 3 reaches the predetermined position, the limit component 204 releases (S923). The positioning component 303 of the charging host 3 forms a locking state with the locking rail 402 (S924), and the movable plugin module 301 of the charging host 3 forms an electrical connection with the static plug-in module 401 of the charging station 4 (S925). In this electrically connected state, the charging host 3 can obtain alternating current from the charging station 4 side to power itself, and also can supply direct current converted by the charging host 3 to the charging station 4, so that the charging host 3 can charge the vehicle via the charging gun connected to the charging station 4. Thus, the charging host 3 completes a charging protocol handshake with the vehicle through the charging gun 407 (S927).

Thus, the charging host 3 completes a charging protocol handshake with the vehicle through the charging gun 407 (S927).

Following the step S740, proceeding to initialization step S750 and charging and billing step S760. In step S750, the initialization step of initializing the charging host mounting platform as a vacant state is performed. The initialization step S750 further comprises the following steps S928 to S932. Specifically, the push and receive module 205 retracts towards the charging host mounting platform 2 (S928), and the position of the push and receive module 205 is sensed (S929), so as to determine whether the predetermined position is reached (S930). If the predetermined position is reached, the push and receive module 205 is restored to the initial state (S931), and the state of the charging host mounting platform 2 is changed to vacant state (S932), thereby the charging pile obtaining process ends.

In the charging and billing step S760, the charging host 3 starts charging the vehicle and performs billing (S927), thereby the charging control flow ends.

In summary, the technical solution of the invention effectively resolves the issue of prolonged parking occupancy during charging the new energy vehicle, thereby enhancing parking space utilization and improving the user's charging experience.

Although the invention has been described with reference to exemplary embodiments above, these embodiments serve only to illustrate the technical concept and features of the invention and should not be construed as limiting the scope of protection of the invention. Any equivalent variations or modifications made in accordance with the spirit and essence of the invention shall be encompassed within the scope of protection of the invention.

## Claims

1. A charging control method for vehicle charging equipment, the vehicle charging equipment is hung on a travelling guide rail hoisted on a top of a parking, a plurality of charging stations each connected with charging gun are arranged in correspondence with parking spaces in the parking along the travelling guide rail, the vehicle charging equipment comprises a charging host mounting platform that can be hung and travel on the travelling guide rail, and a charging host that is hung below the charging host mounting platform in a detachable manner, the charging control method comprising:
a charging instruction receiving step (S710), the charging host mounting platform receives a charging instruction, the charging instruction instructs the charging host mounting platform to transport the charging host to a target charging station among the plurality of charging stations to execute a charging task;
charging pile searching step (S720), upon receiving the charging instruction, the charging host mounting platform moves to the location of the charging host and is hung with the charging host;
charging pile moving step (S730), the charging host mounting platform hung with the charging host moves to the target charging station in accordance with the received charging instruction; and
charging pile unloading and host-station engaging step (S740), the charging host mounting platform unloads the charging host and causes the charging host to engage with the target charging station so as to form an electric connection,
wherein, the target charging station is a charging station corresponding to the parking space of a vehicle to be charged, and
in a state where the charging host and the target charging station are engaged, a movable plugin module of the charging host and a static plug-in module of the target charging station form an electric connection, so as to be able to obtain alternate current from the target charging station side to supply power to the charging host, supply a direct current converted by the charging host to the target charging station, thus enabling the charging host to charge a vehicle through the charging gun connected with the target charging station.

2. The charging control method according to claim 1, the charging control method further comprising:
an initialization step (S750), the charging host mounting platform is initialized as a vacant state; and
a charging and billing step (S760), the charging host supplies power to the vehicle and bills the charging.

3. The charging control method according to claim 1 or 2, wherein the charging pile searching step further comprises:
a station moving-away step (S810), the charging host mounting platform moves away from the current charging station;
a parking step (S820) executed by the charging host mounting platform for the charging station where the vacant charging host is located;
a hanging step (S830), the charging host mounting platform hangs the charging host.

4. The charging control method according to claim 3, wherein the hanging step further comprising:
causing a push and receive module of the charging host mounting platform push towards the charging station side;
if a distance between the push and receive module and the charging host reaches a predetermined position, locking the charging host and the push and receive module;
the push and receive module carrying the charging host retract from the charging station side towards the charging host mounting platform;
after retracting the charging host to the predetermined position, causing the charging host to form a locking with the charging host mounting platform.

5. The charging control method according to claim 1 or 2, wherein the charging pile transport step further comprising:
releasing a locking state between the charging host mounting platform and the currently parked charging station (S715);
the charging host mounting platform carrying the charging host moves on the travelling guide rail to the target charging station (S716);
the charging host mounting platform forms a locking state with the target charging station (S717).

6. The charging control method according to claim 1 or 2, wherein the charging pile unloading and host receiving step further comprising:
the charging host forms a locking with a push and receive module of the charging host mounting platform (S919);
the push and receive module pushes the charging host towards the target charging station side (S920);
after the charging host reaches the predetermined position, causing the charging host to form a locking state with the target charging station (S924);
electrically connecting the movable plugin module of the charging host with the static plug-in module of the charging station (S925);
the charging host completes a charging protocol handshake with the vehicle (S927).

7. The charging control method according to claim 2, the initialization step further comprising:
a push and receive module of the charging host mounting platform retracts towards the charging host mounting platform side (S928);
after the push and receive module reaches the predetermined position, the push and receive module recovers an initial state (S931), and the state of the charging host mounting platform is changed to a vacant state (S932).

8. A charging control apparatus for vehicle charging equipment, the vehicle charging equipment is hung on a travelling guide rail hoisted on a top of a parking, a plurality of charging stations each connected with charging gun are arranged in correspondence with parking spaces in the parking along the travelling guide rail, the vehicle charging equipment comprises a charging host mounting platform that can be hung and travel on the travelling guide rail, and a charging host that is hung below the charging host mounting platform in a detachable manner, the charging control apparatus comprising:
a charging instruction receiving means that causes the charging host mounting platform to receive a charging instruction, the charging instruction instructs the charging host mounting platform to transport the charging host to a target charging station among the plurality of charging stations to execute a charging task;
a charging pile searching means that, upon receiving the charging instruction, causes the charging host mounting platform to move to the location of the charging host and to be hung with the charging host;
a charging pile moving means that causes the charging host mounting platform hung with the charging host to move to the target charging station in accordance with the received charging instruction; and
a charging pile unloading and host-station engaging means that causes the charging host mounting platform to unload the charging host and causes the charging host to engage with the target charging station so as to form an electric connection,
wherein, the target charging station is a charging station corresponding to the parking space of a vehicle to be charged, and
in a state where the charging host and the target charging station are engaged, a movable plugin module of the charging host and a static plug-in module of the target charging station form an electric connection, so as to be able to obtain alternate current from the target charging station side to supply power to the charging host, supply a direct current converted by the charging host to the target charging station, thus enabling the charging host to charge a vehicle through the charging gun connected with the target charging station.

9. The charging control apparatus according to claim 8, further comprising:
an initialization means that initializes the charging host mounting platform as a vacant state; and
a charging and billing means that causes the charging host to supply power to the vehicle and to bill the charging.

10. The charging control apparatus according to claim 8 or 9, the charging pile searching means further comprising:
a station moving-away unit that the charging host mounting platform moves away from the current charging station;
a parking unit, executing parking by the charging host mounting platform for the charging station where the vacant charging host is located;
a hanging unit through which the charging host mounting platform hangs the charging host.
